# EUROPEAN PATENT SPECIFICATION

(11) **EP 2 034 856 B1**
(45) Date of publication and mention of the grant of the patent: **25.01.2012**
(21) Application number: 07777250.7
(22) Date of filing: 23.05.2007
(51) Int. Cl.: A23L 2/02, A23L 2/44, A23F 5/00

(54) **BEVERAGE COMPOSITIONS COMPRISING A PRESERVATIVE SYSTEM**
GETRÄNKEZUSAMMENSETZUNG ENTHALTEND EIN KONSERVIERUNGSMITTELSYSTEM
COMPOSITIONS DE BOISSONS COMPRENANT UN SYSTÈME DE CONSERVATEURS

(30) Priority: 26.05.2006 US 441220
(43) Date of publication of application: 18.03.2009
(73) Proprietor: The Coca-Cola Company, Atlanta, GA 30313 (US)
(72) Inventor: SAFKO, Paula, Windermere, FL 34786 (US)
(74) Representative: Jackson, Robert Patrick
(86) International application number: PCT/US2007/012350
(87) International publication number: WO 2007/139864

(56) References cited:
- EP-A- 1 782 701
- EP-B1- 0 746 212
- WO-A-00/69282
- WO-A-01/87095
- WO-A-99/21431
- WO-A-2006/084553
- CEYLAN ET AL.: "Antimicrobial activity and synergistic effect of cinnamon with sodium benzoate or potassium sorbate incontrolling Escherichia coli O157:H7 in apple juice" JOURNAL OF FOOD SCIENCE, vol. 69, no. 4, 2004, pages FSM102-FSM106, XP008084107
- DATABASE WPI Week 198302 Derwent Publications Ltd., London, GB; AN 1983-03563K XP002452712 & JP 57 194775 A (ASAMA KASEI KK) 30 November 1982 (1982-11-30)

## Description

This application claims priority to U.S. Patent Application No, 11/441,220 filed on May 26, 2006.

The present Invention is directed to beverage compositions comprising a preservative system comprising cinnamic acid and at least one weak acid chosen from benzoic acid, sorbic acid, alkali metal salts of benzoic and/or sorbic acid, and mixtures thereof; a beverage component comprising a juice; and water; wherein the composition has a pH ranging from about 2.4 to about 4.5, with the proviso that the composition does not include tea concentrates, extracts or powders.

Microbial spollage of beverages remains a well-known concern In the beverage industry today. Beverages have varying degrees of sensitivity to microbiological spoilage depending on intrinsic factors of the beverage such as pH, nutrient content (e.g., juice, vitamin, or micronutrient content), carbonation level, Brix, and water quality (e.g., alkalinity and/or hardness). Spoilage events occur when microorganisms are able to overcome the beverage's intrinsic factors and grow. The microorganisms' ability to overcome these hurdles can be influenced by, among other things, initial contamination level, temperature, and package integrity of the beverage against carbonation loss, i.e., In the case of carbonated soft drinks.

Microbiological spoilage can result from one or more yeasts, bacteria, and/or mold microorganisms. For example, yeasts and bacteria are capable of spoiling carbonated and non-carbonated beverages such as fruit drinks, teas, coffees, enhanced waters, etc. Typically, spoilage by yeasts manifests itself as fermentation with gas and ethanol production, as well as sedimentation, off- flavors and odors, and loss of cloud or emulsion stability. Bacteria tend to produce off-flavors and odors with associated sedimentation. On the other hand, molds may survive but generally are not capable of growth In low oxygen environments and thus, do not spoil carbonated soft drinks except when carbonation is diminished. Mold spoilage of non-carbonated beverages, however, can occur and may be evident after mold mycelial growth, by floating globules, clumps or surface pellicles.

Although yeasts such as *Saccharomyces*, *Zygosaccharomyces*, *Candida*, and *Dekkera* spp. are often responsible for spoilage incidents in common beverages, acidophilic bacteria such as *Lactobacillus*, *Leuconostoc*, *Gluconobacter*, and *Zymomonas* spp. and molds like *Penicillium* and *Aspergillus* spp. can also spoil cold-filled beverages. Spores of acidophilic, thermophilic bacteria such as *Alicyclobacillus* spp. and heat resistant mold spores of *Byssochlamys* and *Neosartoria* spp. can survive pasteurization and may spoil noncarbonated hot-filled products such as sport drinks and teas. Packaged waters are susceptible to growth by molds as well.

Protection against microbiological spoilage of beverages can be achieved using chemical preservatives and/or processing techniques such as hot filling, tunnel pasteurization, ultra-high temperature (UHT) or pasteurization followed by aseptic packaging and/or pasteurization followed by chilling the beverage. Generally, beverages with a pH < 4.6 can be chemically preserved, heat processed, and filled into packages such that the product is not re-contaminated. For example, process techniques such as cold filling followed by chemical preservatives or pasteurization with cold filling may used to preserve this type of beverage. In a similar manner, this same beverage may be processed using non-preserved techniques such as hot filling, tunnel pasteurization, pasteurization followed by aseptic filling or even requiring the beverage to be chilled, i.e., under refrigeration following the pasteurization step. Beverages having a pH ≥ 4.6 must be processed such that spores are destroyed using ultra-high temperatures followed by aseptic filling into packages or using a retort.

Current preservation systems for acidic, shelf-stable, carbonated and non-carbonated soft drinks rely on weak acid preservatives (e.g., benzoic and/or sorbic acid). Benzoic and sorbic acids (and salts thereof) effectively inhibit yeast, bacteria, and molds with some exceptions. Weak acids in beverages exist in equilibrium between their dissociated and undissociated forms, which is dependent upon the dissociation constant of the acid (pKa) and the beverage's pH. The pKa for benzoic acid is 4.19 and the pKa of sorbic acid is 4.76. A beverage pH below the pKa of the involved acid pushes the equilibrium towards the undissociated form. The undissociated form is more efficacious against microorganisms, and therefore, weak acid preservatives may be most effective in the low pH range. The preservation properties of weak acids may be enhanced by the addition of chelating compounds to the beverage. For example, common chelating compounds added to beverages include calcium disodium ethylenediaminetetraacetic acid (EDTA) or one or more of the polyphosphates, such as sodium hexametaphosphate (SHMP). In high nutrient non-carbonated products, such as those beverages containing juice, vitamins and/or minerals, the weak acids are more likely to exert inhibition if used in conjunction with preservative enhancers.

As an example, U.S. Patent No. 5,431,940 teaches a noncarbonated beverage containing 900 to 3000 ppm of a polyphosphate, 400 to 1000 ppm of a preservative selected from sorbic acid, benzoic acid, alkali metal salts thereof, 0.1 % to 10% fruit juice, and 80% to 90% water. This beverage can be stored at ambient temperature for at least 10 days without substantial microbial proliferation therein after exposure to beverage spoilage microorganisms.

Weak acid preservation systems, however, have limitations. Genetic adaptation and subsequent resistance by microorganisms may be one of the biggest concerns. See Piper, P. et al., Weak Acid Adaptation: The Stress Response that Confers Yeasts with Resistance to Organic Acid Food Preservatives, 147 Microbiol. 2635-2642 (2001). Certain yeasts, such as *Z. bailii*, *Z. bisporus*, *C. krusei*, and *S. cerevisiae*, have specific genes that enable them to resist the weak acid preservatives and grow, despite their presence and regardless of the co-presence of EDTA or SHMP. Some bacteria, such as *Gluconobacter* spp., are also thought to be preservative resistant. The levels of weak acids necessary to overcome this resistance have been shown to be far beyond regulatory limits on use levels. Most often, spoilage of preserved teas, juice-containing beverages, and carbonated beverages is due to preservative-resistant yeasts.

Weak acids can also impart throat or mouth burn when used at high levels. Although there are certain shelf-stable beverages where this may be acceptable, often this sensory perception is considered negative. Similarly, polyphosphates can have some limitations. For example, polyphosphates can impart off-flavors to a beverage. Polyphosphate, moreover, can bind to and inactivate minerals such as calcium, iron and magnesium that may be used to fortify a beverage. Thus, these minerals are avoided when polyphosphates are part of or are the preservative system of a beverage.

In addition, the other process techniques for low acid beverages (i.e., pH ≥ 4.6) have limitations. Such low acid beverages should be thermally-treated sufficiently to destroy spores of *Clostridium botulinum* and *Bacillus cereus.* Examples of such processes include UHT and retort. Even after such processing, the beverage products should be handled in a way to prevent post-processing contamination. Research, however, suggests that there may still be various strains of microorganisms that can survive these different processing techniques. To that end, these processing techniques may not eliminate the potential for spoilage. Accordingly, it is desirable to solve at least one of the above-mentioned limitations in the art.

The present inventor has discovered that a beverage composition comprising at least one beverage component chosen from juices, sweeteners and mixtures thereof, water and a preservative system comprising cinnamic acid and at least one additional weak acid chosen from benzoic acid, sorbic acid, alkali metal salts of benzoic and/or sorbic acid, and mixtures thereof may be useful in solving at least one of the above-mentioned limitations in the art. For example, by eliminating polyphosphates, the beverage compositions of the present invention reduce off- flavors and allow for the addition of nutritional ingredients otherwise negated with polyphosphates, while still maintaining microbial stability, In addition, sorbic and/or benzoic acid in combination with cinnamic acid may be used at acceptable levels minimizing off-flavors.

Accordingly, the present invention is directed to a beverage composition comprising: a preservative system comprising from 20 ppm to 400 ppm of cinnamic acid and from 100 ppm to 500 ppm of at least one weak acid chosen from benzoic acid, sorbic acid, alkali metal salts of benzoic and/or sorbic acid, and mixtures thereof; a beverage component comprising a juice; and from 60% to 99 % of water, by weight relative to the total composition, wherein the composition has a pH ranging from 2.4 to 4.5, with the proviso that the composition does not comprise tea concentrates, extracts or powders.

In one embodiment, the beverage composition further comprises from 10 ppm to 40 ppm EDTA.

It is to be understood that both the foregoing general description and the following detailed description are exemplary and explanatory only and are not restrictive of the present invention, as claimed.

### BRIEF DESCRIPTION OF THE DRAWINGS

Figure 1 is a graph of values reported in Table 1 of Example 1.

Figure 2 Is a graph of values reported in Table 2 of Example 1.

Figure 3 is a graph of values reported in Table 4 of Example 2.

Figure 4 Is a graph of values reported In Table 5 of Example 2.

Figure 5 is a graph of values reported in Table 7 of Example 3.

Figure 6 is a graph of values reported In Table 8 of Example 3.

### DESCRIPTION

The present invention is directed to a beverage composition comprising a preservative system comprising cinnamic acid and at least one weak acid chosen from benzoic acid, sorbic acid, alkali metal salts of benzoic and/or sorbic acid, and mixtures thereof; a beverage component comprising a juice; and water; wherein the composition has a pH ranging from 2.4 to 4.5, with the proviso that the composition does not include tea concentrates, extracts or powders. The preservative system comprises antimicrobial amounts of cinnamic acid and at least one weak acid. The present invention has been surprisingly and unexpectedly discovered to have microbial stability. Microbial stability can be achieved through the combination of the compounds comprising the preservative system, the pH of the composition, the water, and the at least one beverage component. As a result, beverage compositions of the present Invention do not require the addition of polyphosphates that can add off-flavors and the use of processing techniques such as aseptic filling, hot filling, pasteurization with cold filling or tunnel pasteurization to maintain microbial stability.

As used herein, "microbial stability" or "microbiological stability" refers to at least a 2.0 log cfu/ml reduction In microorganisms such as yeasts and bacteria within 14-28 days in comparison to an unpreserved beverage. With regard to mold, expression is evaluated at around 4 weeks or 30 days, to determine the presence or absence of expression.

As used herein, the term "beverage" or "beverage composition" refers to a liquid drink that is appropriate for human or animal consumption. Mention may be made, of beverages, but not limited to, for example, energy drinks, flavored water, fruit smoothies, sport drinks, fruit juices (e.g., juice drinks and full strength fruit juice as provided in 21 C. F. R. Part 101,30), carbonated sodas/juices, shakes, protein drinks (e.g., dairy, soy, rice or other), meal replacements, drinkable dairy yogurts, drinkable soy yogurts, coffees, cola drinks, fortified waters, low acid beverages as defined in 21 C. F. R. Part 113, acidified beverages as defined in 21 C. F. R. Part 114, syrups, cordials, dilutables such as squashes, health drinks, functional beverages (e.g., nutraceuticals), nectars, tonics, horchata (i.e., vegetable and/or rice components made into a beverage), frozen carbonated beverages, and frozen uncarbonated beverages, with the proviso that tea beverages prepared from tea concentrate, extracts or powders are excluded.

Preservative System

According to the present invention, the preservative system comprises cinnamic acid and at least one weak acid chosen from benzoic acid, sorbic acid, alkali metal salts of benzoic and/or sorbic acid, and mixtures thereof. The preservative system comprises from 20 ppm to 400 ppm of cinnamic acid and at least one weak acid chosen from benzoic acid, sorbic acid, alkali metal salts of benzoic and/or sorbic acid, and mixtures thereof.

Each of the components of the preservative system are known to be preservatives individually, as is the mechanism by which each preservative inhibits microbial growth. The present inventor, however, discovered that these particular preservatives in combination along with the levels of these preservatives and other parameters can achieve and maintain microbial stability and maintain the flavor of beverage composition to yield an amblent microbially stable beverage.

For example, cinnamic acid, or 3-phenyl-2-propenoic acid, is a white crystalline acid derived from cinnamon or from balsams such as storax or can be prepared synthetically. Cinnamic acid is commonly used as a food additive and known to possess antimicroblal action as a weak acid. Because of its relatedness to cinnamon, cinnamic acid tends to impart a spice or a wood note flavor when added to a beverage composition. Low levels of cinnamic acid such as around 10 ppm impart such a flavor and higher levels such as around 30 ppm imparts an even stronger flavor. See e.g., U.S. Patent No. 6,599,548. This strong flavor can mask the off-flavors of other ingredients such as other preservatives, but can also mask other desirable flavors. Thus, cinnamic acid is often found in tea beverages, as it complements the natural flavoring of teabased beverages but it Is not commonly known to be used In compositions other than teas because of its flavoring.
Document WO01/87095 discloses tea beverages and synthetic soft drinks which contain from 1 to 175 ppm cinnamic acid, 10 to 200 ppm sorbic acid or benzoic acid and at least one essential oil.
Journal of Food Sciences, vol 69, nr 4, 2004, pages FSM102 - FSM106, Ceylan et al., discloses a synergistic mixture of cinnamon and sodium benzoate or potassium sorbate in controlling microbial activity in apple juice.

As used herein, the term "cinnamic acid" refers to naturally and synthetically prepared cinnamic acid, cinnamic acid isomers, salts thereof, and derivatives thereof. For example, in the food industry, there are a number of cinnamic acid derivatives such as hydroxycinnamic acid, cinnamic aldehyde, p-dimehtylamino-cinnamate, cinnamyl acetate, cinnamyl alcohol, cinnamyl benzoate, cinnamyl cinnamate, cinnamyl formate, cinnmayl isobutyrate, cinnamyl isovalerate, and cinnamyl phenylacetate. In addition, it is known in the art that other polyphenols compounds such as ferulic acid, caffeic acid, coumaric add, sinapic acid, syringic acid, gallic acid, chlorogenic acid, vanillic acid, hydroxybenzoic acid, ellagic acid, salts thereof and/or derivatives thereof are equivalents to cinnamic acid. In at least one embodiment, the preservative system comprises racemic cinnamic add, i.e., cis and trans isomers.

Having a pKa around 4.44, cinnamio acid is generally found in its undissociated form in a beverage having a pH ranging from 2.4 to 4.5, which form tends to be more efficacious against microorganisms. The cinnamic acid of the preservative system is present in an amount ranging from 20 ppm to 400 ppm. For example, cinnamic acid may be present In an amount ranging from 50 ppm to 300 ppm and further for example, from 100 ppm to 200 ppm. In at least one embodiment, the cinnamic acid may be present in the preservative system in an amount from 50 ppm to 225 ppm. Although cinnamic acid imparts certain flavors to the beverage compositions at these recited levels, the present inventor has surprisingly found that in combination with the other components of the present invention such impact Is minimal and not negatively perceived.

In addition to the cinnamic acid component of the preservative system, at least one weak acid chosen from benzoic acid, sorbic acid, alkali metal salts of benzoic and/or sorbic acid, such as potassium, calcium and sodium, and mixtures thereof is also included. Weak acids such as benzoic and sorbic acid, like cinnamic acid, have been known as food additives and as antimicrobial agents.

The at least one weak acid is present in the composition of the present invention in an amount ranging from 100 ppm to 500 ppm, depending on whether a weak acid is used alone or in combination. For example, when benzoic and sorbic acid are used in combination, they may be present in the beverage in an amount ranging from 100 ppm to 500 ppm and further for example, from 150 ppm to 350 ppm. Alternatively, when the at least one weak add is benzoic or sorbic acid alone, the weak acid may be present in the beverage in an amount ranging from 126 ppm to 500 ppm. In at least one embodiment, the at least one weak acid is sorbic acid or a salt thereof in an amount ranging from 200 ppm to 450 ppm.

Water

According to the present invention, the composition comprises water. The water may be "treated water", "purified water", "demineralized water", and/or "distilled water." The water should be suitable for human consumption and the composition should not be, or should not be substantially detrimentally, affected by the inclusion of the water. This added water to the composition is in addition to water found In or with other components of the present invention, e.g., the at least one juice component.

The water of the present invention is present In an amount ranging from 60% to 99%, and further for example, from 80% to 99%, by weight relative to the total composition. The added water component may also meet certain quality standards such as biological, nutrient, and sediment criteria.

The water hardness of the added water component may range from 55 ppm to 250 ppm, such as from 60 ppm to 180 ppm. Water hardness refers to the amount of cations, e.g., calcium carbonate, present in the water. As provided in the present invention, water hardness is measured according to the Association of Official Analytical Chemists (AOAC) standards described in the Official Methods of Analysis, published by the AOAC (William Horwitz ed., 18th ed. 2005), the relevant contents of which are incorporated herein by reference.

Beverage Component

The beverage composition of the present invention comprises a beverage component comprising a juice. The beverage component may further comprise a sweetener.

For example, the juice and optional sweetener can provide to the composition of the present invention beneficial characteristics such as flavor and nutrients. Although the juice and sweetener impart beneficial properties to the compositions, each also can be a food source for microorganisms that have infected the composition. As a result, the use of the present invention provides for the incorporation of the juice and sweetener without surrendering microbial stability.

The juice component may be derived from, but not limited to, citrus and non-citrus fruits, vegetables, botanicals, or mixtures thereof. Mention may be made, among citrus and non-citrus fruits, but not limited to, peaches, nectarines, pears, quinces, cherries, apricots, apples, plums, figs, kiwis, Clementines, kumquats, minneolas, mandarins, oranges, satsumas, tangerines, tangelos, lemons, limes, grapefruits, bananas, avocados, dates, hogplums, mangos, gooseberry, star fruits, persimmons, guavas, passion fruits, papayas, pomegranates, prickly pears, blue berries, black berries, raspberries, grapes, elderberries, cantaloupes, pineapples, watermelons, currants, strawberries, cranberries, and mixtures thereof.

Mention may be made among vegetables, but not limited to, carrots, tomatoes, spinach, peppers, cabbage, sprouts, broccoli, potatoes, celery, anise, cucumbers, parsley, beets, wheat grass, asparagus, zucchini, rhubarb, turnip, rutabaga, parsnip, radish, and mixtures thereof.

Botanical juices can be used and are often obtained from, for example, but not limited to, beans, nuts, bark, leaves and roots of a plant, i.e., something other than the fruit of the plant. For example, botanical juices may impart flavors such as vanilla, coffee, cola, coca, and mixtures thereof excluding tea solids (e.g., tea concentrates, extract or powders). These flavors may be derived naturally or synthetically.

The at least one juice may be present in the beverage composition of the present invention in an amount ranging from 0.1 % to 50%, by weight relative to the total composition. For example, the at least one juice may be present in an amount ranging from 0.5% to 25%, and further for example, from 1% to 10%, by weight relative to the total composition.

The at least one sweetener may be chosen from nutritive sweeteners, non-nutritive sweeteners, and mixtures thereof. The at least one sweetener may be natural, artificial, or mixtures thereof. Of the nutritive (i.e., caloric) sweeteners, the present compositions may include, for example, carbohydrate sweeteners such as monosaccharides and/or disaccharides. Mention may be made among caloric sweeteners, but not limited to, fructose, sucrose, glucose, sugar alcohols, corn syrup, evaporated cane juice, rice syrups, maple syrup, black malt syrups, fruit juice concentrate, honey, agave, tapioca syrup, chicory root syrup, and mixtures thereof. The non-nutritive sweeteners may include, but are not limited to, luo han guo, stevia and derivatives thereof, erythrithol, acesulfame potassium, aspartame, neotame, saccharin, sucralose, tagatose, alitame, cyclamate, and mixtures thereof. Blends of nutritive as well as non-nutritive sweeteners are contemplated herein. The at least one sweetener may be present in an amount conventionally used in beverage compositions and may be adjusted depending upon the desired beverage composition.

pH

The compositions of the present invention, e.g., beverages, have a pH ranging from 2.4 to 4.5. It is known in the art that the pH of a beverage may be a factor in maintaining a shelf-stable beverage, as the growth of some microorganisms may be hindered under acidic conditions. This, however, is not the case for microorganisms such as *Saccharomyces* and *Candida*, which microorganisms thrive In such an acidic environment. Utilizing the present invention allows the composition to maintain microbial stability even in view of these microorganisms.

In addition, compositions of the present invention may comprise fruits and vegetables resulting in a high acid and tart flavors. Generally, a beverage having at least one carbohydrate in the amount ranging from 0% to 15%, by weight relative to the total composition, and at least one acid ranging from 0% to 0.7%, by weight relative to the total composition, can offset such acid and tart flavors. This range may be suitable for not only beverages, but also syrups when properly diluted to form a single strength beverage.

For an acidic beverage (pH < 4.6), the acidity of the beverage can be adjusted to and maintained within the recited range by known and conventional methods in the art. For example, the pH can be adjusted using one acidulant or more acidulants. In addition, the use of acidulants may assist in microbial inhibition at the same time as maintaining the pH of the beverage. Compositions of the present invention, however, may inherently have a desirable pH without the use of any acidulants or other components to modify the pH. Thus, the incorporation of at least one acidulant is optional In compositions of the present invention.

Mention may be made among possible acidulants, but not limited to, organic and inorganic acids to be used in adjusting the pH of a composition of the present invention such as a beverage. The acidulants may also be in an undissociated form or in their respective salt form such as potassium, sodium or hydrochloride salts. Acidulants used in the present composition may be, but not limited to, the following: citric acid, ascorbic acid, malic acid, benzoic acid, phosphoric acid, acetic acid, adipic acid, fumaric acid, gluconic acid, tartaric acid, lactic acid, propionic acid, sorbic acid, or mixtures thereof. In one embodiment, the acidulant is citric acid.

Moreover, the amounts of the acidulant(s), which may be present in the composition according to the present disclosure, are those conventionally used in beverage compositions. For example, at least one acidulant may be present in an amount ranging from 0% to 1%, by weight relative to the composition.

Optional Components

Compositions of the present invention may further comprise optional components commonly found in conventional beverages. Such optional ingredients may be dispersed, solubilized, or otherwise mixed into or with the composition of the present invention. For example, mention may be made of conventional beverage, such as but not limited to ethylenediaminetetraacetic acid (EDTA), additional preservatives, coloring agents, flavoring agents, flavanoids, vitamins, minerals, proteins, emulsifiers, carbonation components, thickeners, i.e., viscosity modifiers and bodying agents, antioxidants, anti-foaming agents, and mixtures thereof.

EDTA

The preservative system may also comprise ethylenediaminetetraacetic acid (EDTA). As used herein, "EDTA" refers to natural and synthetically prepared EDTA and salts thereof such as calcium disodium ethylenediaminetetraacetic acid or Ethylenediaminetetraacetic acid disodium salt. EDTA is a chelating agent that has been recognized by the FDA as being generally recognized as safe (GRAS) and can be used as a food additive. See 21 C.F.R. §§ 172.0135, 173.315. Because of the chemical structure, EDTA can, among other things, sequester metals and stabilize vitamins. It is postulated that sequestering metals, EDTA removes these metals that are needed by enzymes of microorganisms and essentially starve the microorganisms.

EDTA may be present In the composition of the present invention in an amount ranging from 10 ppm to 40 ppm, such as from 10 ppm to 30 ppm, and further for example, from 15 ppm to 25 ppm. In at least one embodiment, EDTA Is present in the beverage composition in an amount ranging from 15 ppm to 30 ppm.

Additional Preservatives

The composition of the present invention may further comprise at least one additional preservative, in addition to the preservative system. As used herein, the term "preservative" includes all preservatives approved for use in beverage and/or food product compositions with the proviso that the at least one additional preservative cannot be a polyphosphate such as sodium hexametaphosphate. Mention may be made among additional preservatives such as, but not limited to, chemical preservatives (e.g., citrates, and salts thereof), free fatty acids, esters and derivatives thereof, peptides, lauric arginate, cultured dextrose, neem oil, eugenol, p-cymene, thymol, carvacrol, linalool, natamycin, tea tree oil, fingerroot extract, acia powder, 4-hydroxybenzyl isothiocyanate and/or white mustard seed essential oil, ferulic acid, and mixtures thereof. Additional preservatives, moreover, may include, but not limited to, lacto-antimicrobials such as lactoferrin, lactoperoxidase, lactoglobulins and lactolipids, ovo-antimicrobials such as lysozyme, ovotransferrin, ovoglobulin IgY and avidin, phyto-antimicrobials such as phyto-phenols, flavonoids, thiosulfinates, catechines, glucosinolates and agar, bacto-antimicrobials such as probiotics, nisin, pediocin, reuterin and sakacins, acid-anticmicrobials such as lactic acid, acetic acid and citric acid, milieu-antimicrobials such as sodium chloride, polyphosphates, chloro-cides and ozone. The at least one additional preservative may be present in an amount not exceeding maximum mandated levels, as established by the U.S. Food and Drug Administration or other food and beverage governing bodies.

Coloring Agents

The compositions of the present invention may further comprise at least one coloring agent. Mention may be made, among colorants, but not limited to, of FD&C dyes, FD&C lakes, and mixtures thereof. Any other colorant used in beverages and/or food products may be used. For example, a mixture of FD&C dyes or a FD&C lake dye in combination with other conventional beverage and/or food colorants may be used. Moreover, other natural coloring agents may be utilized including, for example, fruit, vegetable, and/or plant extracts such as grape, black currant, carrot, beetroot, red cabbage, and hibiscus.

Flavoring Agents

The present composition may further comprise at least one flavoring agent, wherein the at least one flavoring agent excludes tea solids. The at least one flavoring agent may include, but not limited to, oils, extracts, oleoresins, any other flavoring agent known in the art, and mixtures thereof. For example, suitable flavors include but are not limited to fruit flavors, cola flavors, coffee flavors, chocolate flavors, diary flavors, coffee, kola nut, ginseng, cacao pod, and mixtures thereof. Suitable oils and extracts may include, but are not limited to, vanilla extract, citrus oil and extract, and mixtures thereof. These flavors may be derived from natural sources such as juices, essential oils and extracts, or may be synthetically prepared. Moreover, the at least one flavoring agent may be a blend of various flavors such as fruits and/or vegetables excluding tea solids (e.g., tea concentrates, extracts or powders).

Flavanoids

The present invention may optionally comprise at least one flavanoid, which is a natural substance of a class of plant secondary metabolites. Flavanoids are known to have antioxidant, anti-microbial, and anti-cancer activity. Flavanoids may be found in plants, vegetables, fruits, flowers or any other known natural source by a skilled artisan. Flavanoids may be derived from these sources by conventional means known in the art. Derivation is not limited to a single source of flavanoids, but also may include mixture of sources such as extraction from a single or mixture of vegetables. In addition, flavanoids may be prepared synthetically or by another appropriate chemical means and incorporated into the present composition. Mention may be made of flavanoids such as, but not limited to, quercetin, kaempferol, myricetin, isohammetin, catechin, and derivatives or mixtures thereof.

Vitamins and Minerals

According to the present invention, at least one supplemental vitamin and/or mineral may be optionally incorporated into compositions of the present invention. Similar to the at least one juice component, the added vitamin(s) and/or mineral(s) can also serve as a food source for the microorganisms. Historically, vitamins and minerals such as calcium, iron, and magnesium could not be fortified into a beverage composition because preservatives such as polyphosphates would bind to and inactivate the vitamin and/or mineral. This may be avoided with the beverage compositions of the present invention.

Mention may be made among vitamins such as, but not limited to, riboflavin, niacin, pantothenic acid, pyridoxine, cobalamins, choline bitartate, niacinamide, thiamin, folic acid, d-calcium pantothenate, biotin, vitamin A, vitamin C, one or more B-complex vitamins such as vitamin B₁ hydrochloride, vitamin B₂, vitamin B₃, vitamin B₆ hydrochloride and vitamin B₁₂, vitamin D, vitamin E acetate, vitamin K, and derivatives or mixtures thereof. Mention may be made, among minerals such as, but not limited to, calcium, zinc, iron, magnesium, manganese, copper, iodine, fluoride, selenium, and mixtures thereof. Synthetic vitamins and minerals are also contemplated within the scope of compositions of the present invention. The addition of optional vitamins and minerals should be done with such care that the flavor of the present composition may not be significantly diminished. The at least one supplemental vitamin and/or mineral may be also added to assist the consumer in meeting the U.S. Recommended Daily Intake (RDI) for vitamins and minerals.

Protein

In addition, compositions of the present invention may further comprise at least one protein component, e.g., soy protein extract. The at least one protein component may be from, for example, but not limited to, milk proteins such as casein (caseinate), whey protein, egg whites, gelatin, collagen, and mixtures thereof.

Emulsifier

The present invention optionally comprises at least one emulsifier. Any beverage and/or food grade emulsifier can be used to stabilize an emulsion. Mention may be of emulsifiers such as, but not limited to, gum acacia, modified food starches (e.g., alkenylsuccinate modified food starches), anionic polymers derived from cellulose (e.g., carboxymethylcellulose), gum ghatti, modified gum ghatti, xanthan gum, glycerol ester of wood rosin (ester gum), tragacanth gum, guar gum, locust bean gum, pectin, lecithin and mixtures thereof. For example, a beverage can comprises a cloud emulsion or a flavor emulsion.

For cloud emulsions, the clouding agent can comprise at least one fat or oil stabilized as an oil-in-water emulsion using a suitable food grade emulsifier. Any of a variety of fats or oils may be employed as the clouding agent, provided that the fat or oil is suitable for use in compositions such as beverages. Any suitable beverage and/or food grade emulsifier can be used that can stabilize the fat or oil clouding agent as an oil-in-water emulsion.

Flavor emulsions useful in the compositions, e.g., beverages, of the present invention comprise at least one suitable flavor oil, extract, oleoresin, essential oil and the like, known in the art for use as flavorants in beverages.

Carbonation

According to the present invention, carbonation (e.g., carbon dioxide) may be further added based on techniques commonly known to a person of ordinary skill in the art. For example, carbon dioxide may be added to the water introduced into the beverage or beverage concentrate. The amount of carbonation introduced into the compositions of the present invention will depend on the nature of the beverage and the desired level of carbonation.

Thickeners

Compositions of the present invention may optionally comprise at least one thickener. Mention may be made, among thickeners, i.e., viscosity modifiers and/or bodying agents, such as but not limited to cellulose compounds, gum ghatti, modified gum ghatti, guar gum, tragacanth gum, gum arabic, pectin, xanthum gum, carrageenan, locust bean gum, pectin, lecithin, and mixtures thereof.

Antioxidants

Compositions of the present invention may further comprise at least one antioxidant. The at least one antioxidant may include, but not limited to, ascorbic acid, gum guar; propylgalacte, sulfite and metabisulfite salts; thiodiproprionic acid and esters thereof; spice extracts; grape seed; tea extracts; and mixtures thereof.

Amino Acids

According to the present invention, compositions of the present invention may further comprise at least one amino acid. The at least one amino acid may include, but not limited to, alanine, arginine, asparagine, cysteine, glutamine, glycine, histidine, leucine, lysine, methionine, ornithine, proline, phenylalanine, serine, threonine, tryptophan, tyrosine, valine and mixtures thereof.

Anti-Foaming Agents

The present invention may further comprise at least one anti-foaming agent. The at least one anti-foaming agent may include, but not limited to, calcium alginate, silicone polymers such as polydimethylsiloxane, and fatty acid esters such as propylene glycol fatty acid esters, glycerin fatty acids esters and sorbitan fatty acid esters, and mixtures thereof.

The amounts of these above optional components, which may be present in the compositions according to the invention, are those conventionally used in beverage compositions. In addition, the amount of these additional components will depend upon the desired beverage compositions.

Preparation

The present beverage compositions can be made according to methods which are well known by skilled artisans in the beverage industry. For example, the beverage composition can be prepared by dispersing, dissolving, diffusing or otherwise mixing all the ingredients simultaneously together or sequentially adding ingredients based on solubility or any other parameters with the addition of water, where appropriate. This may be done with a mechanical stirrer or by homogenization techniques commonly known in the art. In addition, the composition of the present invention may be made into a liquid or dry beverage concentrate.

Microbial Evaluation

The compositions of the present invention may be evaluated to determine the microbial stability based on techniques known to those of ordinary skill in the art. For example, one way to determine microbial stability is inoculating a beverage matrix of the present invention for evaluation with a group of microorganisms such as molds, yeasts, and bacteria. These microorganisms may be those previously identified in beverages causing spoilage problems, such as those mentioned below under the Examples or any other type of yeast, mold, bacteria and/or mixtures thereof. Once the media is inoculated, periodic plate counts can be preformed to determine growth of the microorganisms. Based on the plate counts, one can determine the degree of microorganism growth in the inoculate composition, e.g., beverage. The present inventor used standard methods of enumeration in food and beverage microbiology, for example, such as those described in Ito & Pouch-Downes, Compendium of Methods for the Microbiological Examination of Foods (4th ed. Amer. Pub. Health Assoc. 2001), and those found in Notermans, et al., A User's Guide to Microbiological Challenge Testing for Ensuring the Safety and Stability of Food products, 10 Food Microbiology 145-57 (1993), the contents of which are incorporated herein by reference.

In addition, flow cytometry may also be used for growth determinations of the microorganisms. See Jay, J. M., Modern Food Microbiology (Aspen Publishers, Inc., 2000). Flow cytometry uses the principles of light scattering, light excitation and emission of fluorochrome molecules to identify and count the microorganisms. For example, a sample of the inoculated composition is injected into the center of a sheath flow. As the microorganism intercepts the light source, they scatter the light and fluorochromes are excited to a higher energy state. The higher energy state releases as a photon of light having specific properties. The light is essentially converted into electrical pulses that are then transmitted into a readable format such as a graph of viable cell count.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

Other than in the operating examples, or where otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in this specification and attached claims are approximations that may vary depending upon the desired properties sought to be obtained by the present disclosure. At the very least, the claims, each numerical parameter should be construed in light of the number of significant digits and ordinary rounding approaches.

Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements.

### EXAMPLES

The following example include embodiments of beverage compositions comprising the present invention. These compositions were prepared and evaluated to determine microbial stability, i.e., the inhibition and/or reduction of microbial growth and/or microorganism death when inoculated with various microorganisms.

The following examples are considered to embody the present invention and in no way should be interpreted as limitations upon the present invention.

In order to examine beverage compositions falling within the present invention for their microbial stability, the following organisms were used to prepare the various yeast, bacteria and mold inoculum:

| **Microorganism Type** | **Strain** |
|---|---|
| Yeast | *Saccharomyces* spp. |
| | *Zygosaccharomyces* spp. |
| | *Candida* spp. |
| | *Rodotorula* spp. |
| Bacteria | *Lactobacillus* spp. |
| | *Leuconostoc* spp. |
| | *Gluconobacfer* spp. |
| Mold | *Byssochlamys* spp. |
| | *Pennicilium* spp. |
| | *Paecilomyces* spp. |

The examples described below used at least one and in some cases three or more of the above-mentioned microorganisms to prepare a cocktail for testing. The inoculum for each type of microorganism was prepared as follows:

Yeast and Bacterial Inoculum:

A composite culture was prepared of microorganisms by placing one loop full of each microorganism type into sterile inoculum medium. The medium was incubated at room temperature for about 72 hours to enable the growth of the microorganisms. The microorganism were plated and counted for cfu/ml levels. A healthy yeast or bacterial culture may be about 1 x 10⁷ cfu/ml.

Mold Inoculum:

Orange serum agar Petri dishes were spot inoculated with each type of mold. The plates were incubated for approximately two-weeks. The spores were washed off the plates, and the spores were re-suspended in phosphate buffer. The spore population was counted by surface plating on orange serum agar. The plates were Incubated at 25°C for approximately 3 to 5 days.

### EXAMPLE 1

A noncarbonated beverage matrix was formulated. The non-carbonated beverage formulation and processing details are provided below.

A non-carbonated beverage matrix was prepared. The noncarbonated beverage matrix included:

| | |
|---|---|
| Ingredients | Amount |
| Flavoring | 0.114% (v/v) |
| Colorant | 0.005% (v/v) |
| Sweetener | 10.9% (v/v) |
| Cloudifier | 0.0016% (v/v) |
| Water | qs |

The following preservative systems were examined with the beverage matrix above:

| **Beverage Composition** | Sorbic Acid (ppm) | Benzoic Acid (ppm) | Cinnamic Acid (ppm) | % Juice | % Calcium | pH | Brix | Acid |
|---|---|---|---|---|---|---|---|---|
| Control | 0 | 0 | 0 | 10 | 0 | 3.17 | 11.85 | 0.31 |
| A | 250 | 150 | 50 | 10 | 0 | 3.17 | 11.85 | 0.31 |
| B | 150 | 200 | 50 | 10 | 0 | 3.17 | 11.85 | 0.31 |
| C | 250 | 150 | 125 | 10 | 10 | 3.71 | 11.79 | 0.29 |
| D | 150 | 250 | 125 | 10 | 10 | 3.71 | 11.79 | 0.29 |
| E | 150 | 200 | 125 | 10 | 10 | 3.71 | 11.79 | 0.29 |

The beverage matrix was blended. It was then split to incorporate the designated preservative system, i.e., Control and A through E, and pasteurized at 97°C for approximately 20 seconds. The beverage matrix was filled into bottles and capped and allowed to cool to room temperature, i.e., about 25°C. The beverage matrix was stored at about 4°C until use. Next, cultures of microorganisms were prepared according to the protocols listed above. Unpreserved and preserved bottles of beverage matrix were inoculated with microorganisms (duplicate bottles per strain were prepared), i.e., 1 x 10⁴ cfu/ml of yeasts, bacteria and molds. The bottles were shaken approximately 25 times. An initial sample was removed from each container to represent 0 time. The microorganisms were incubated in the inoculated bottles at 25°C. At the designated time intervals, samples were surface plated from each container, stirring or shaking bottles just prior to sampling.

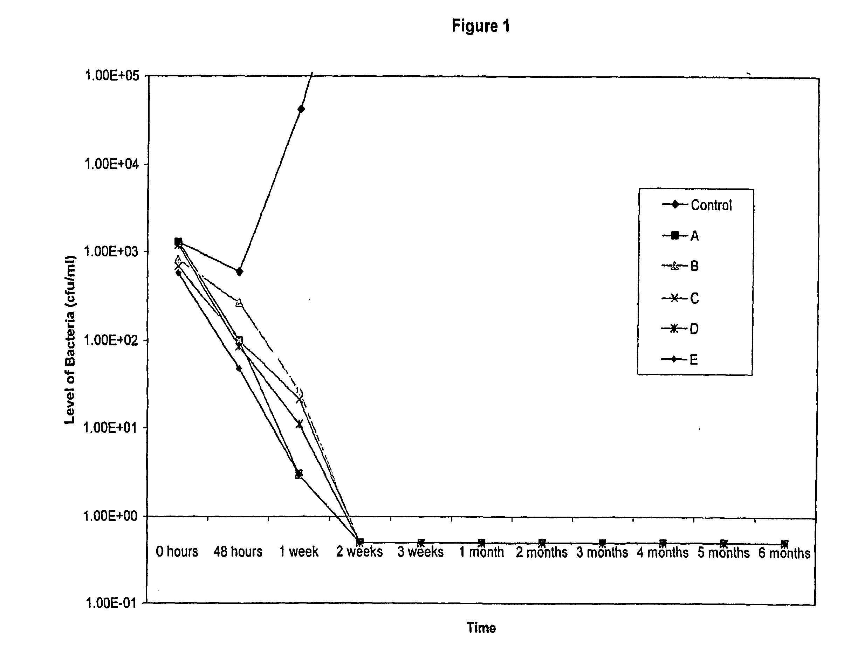

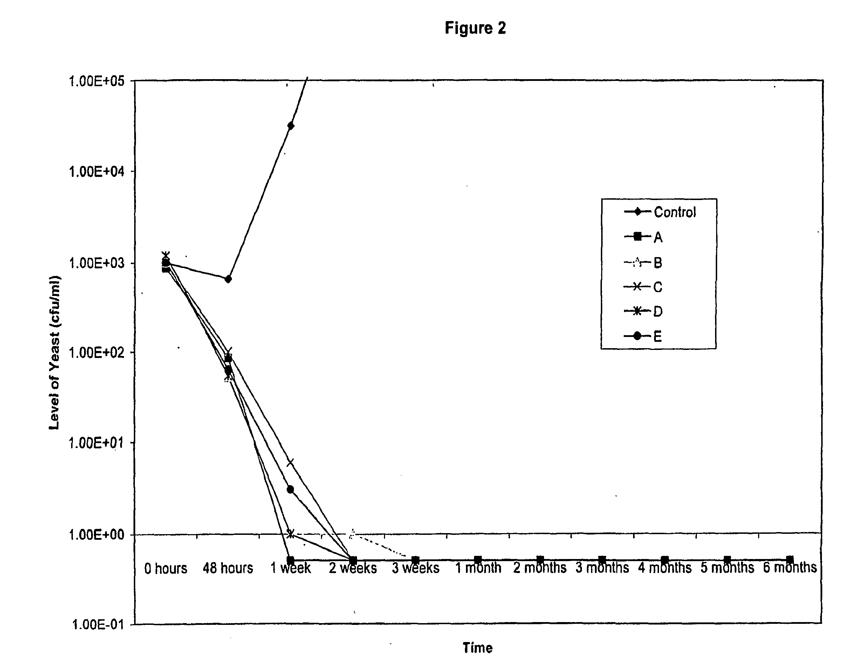

Tables 1 through 3 summarize the results and the beverage compositions examined. In the following tables, a value of 0.50 represents an undetectable level of microorganisms in the beverage composition. Figure 1 graphically illustrates the results in Table 1 and Figure 2 graphically illustrates the results in Table 2.

**TABLE 1: Examination of bacteria (mean cfu/ml) in beverage compositions at 25°C.**

| | **Beverage Composition** | | | | | |
|---|---|---|---|---|---|---|
| **Time** | Control | A | B | C | D | E |
| 0 hours | 1300 | 1300 | 810 | 680 | 1200 | 580 |
| 48 hours | 590 | 100 | 270 | 100 | 85 | 47 |
| 1 week | 42,100 | 3.00 | 26 | 21 | 11 | 3.00 |
| 2 weeks | 9.2 x 10⁶ | 0.50 | 0.50 | 0.50 | 0.50 | 0.50 |
| 3 weeks | - | 0.50 | 0.50 | 0.50 | 0.50 | 0.50 |
| 1 month | - | 0.50 | 0.50 | 0.50 | 0.50 | 0.50 |
| 2 months | - | 0.50 | 0.50 | 0.50 | 0.50 | 0.50 |
| 3 months | - | 0.50 | 0.50 | 0.50 | 0.50 | 0.50 |
| 4 months | - | 0.50 | 0.50 | 0.50 | 0.50 | 0.50 |
| 5 months | - | 0.50 | 0.50 | 0.50 | 0.50 | 0.50 |
| 6 months | - | 0.50 | 0.50 | 0.50 | 0.50 | 0.50 |

**TABLE 2: Examination of yeasts (mean cfu/ml) in beverage compositions at 25°C.**

| | **Beverage Composition** | | | | | |
|---|---|---|---|---|---|---|
| **Time** | Control | A | B | C | D | E |
| 0 hours | 1000 | 860 | 1100 | 1000 | 1200 | 1000 |
| 48 hours | 640 | 86 | 53 | 100 | 55 | 64 |
| 1 week | 31,600 | 0.50 | 1.00 | 6.00 | 1.00 | 3.00 |
| 2 weeks | 3.5 x 10⁶ | 0.50 | 1.00 | 0.50 | 0.50 | 0.50 |
| 3 weeks | - | 0.50 | 0.50 | 0.50 | 0.50 | 0.50 |
| 1 month | - | 0.50 | 0.50 | 0.50 | 0.50 | 0.50 |
| 2 months | - | 0.50 | 0.50 | 0.50 | 0.50 | 0.50 |
| 3 months | - | 0.50 | 0.50 | 0.50 | 0.50 | 0.50 |
| 4 months | - | 0.50 | 0.50 | 0.50 | 0.50 | 0.50 |
| 5 months | - | 0.50 | 0.50 | 0.50 | 0.50 | 0.50 |
| 6 months | - | 0.50 | 0.50 | 0.50 | 0.50 | 0.50 |

**TABLE 3: Examination of mold in beverage compositions at 25°C. Mold results shown in duplicate as Mold 1 and Mold 2.**

| **Beverage Composition** | **Mold 1** | **Mold 2** |
|---|---|---|
| Control | 3 | 3 |
| A | 0 | 0 |
| B | 0 | 0 |
| C | 0 | 0 |
| D | 0 | 0 |
| E | 0 | 0 |

From data in Tables 1 through 3, a beverage composition of the present invention exhibits microbial stability within 14-28 days of being inoculated with yeasts and bacteria in comparison with an unpreserved beverage and exhibit no expression of mold. Microbial stability was also achieved in a beverage composition of the present invention with 10% daily value of calcium.

### EXAMPLE 2

A noncarbonated beverage matrix was prepared and evaluated as detailed in Example 1 but with the following preservative systems:

| **Beverage Composition** | % Juice Content | Sorbic Acid (ppm) | Benzoic Acid (ppm) | Cinnamic Acid (ppm) | EDTA (ppm) | Brix | Acid | pH |
|---|---|---|---|---|---|---|---|---|
| Control | 10 | 0 | 0 | 0 | 0 | 11.8 | 0.29 | 3.19 |
| A | 20 | 150 | 250 | 125 | 0 | 11.91 | 0.28 | 3.51 |
| B | 32 | 150 | 250 | 125 | 0 | 11.96 | 0.28 | 3.56 |
| C | 50 | 150 | 250 | 125 | 0 | 11.88 | 0.28 | 3.76 |
| D | 75 | 150 | 250 | 125 | 0 | 11.95 | 0.28 | 3.83 |

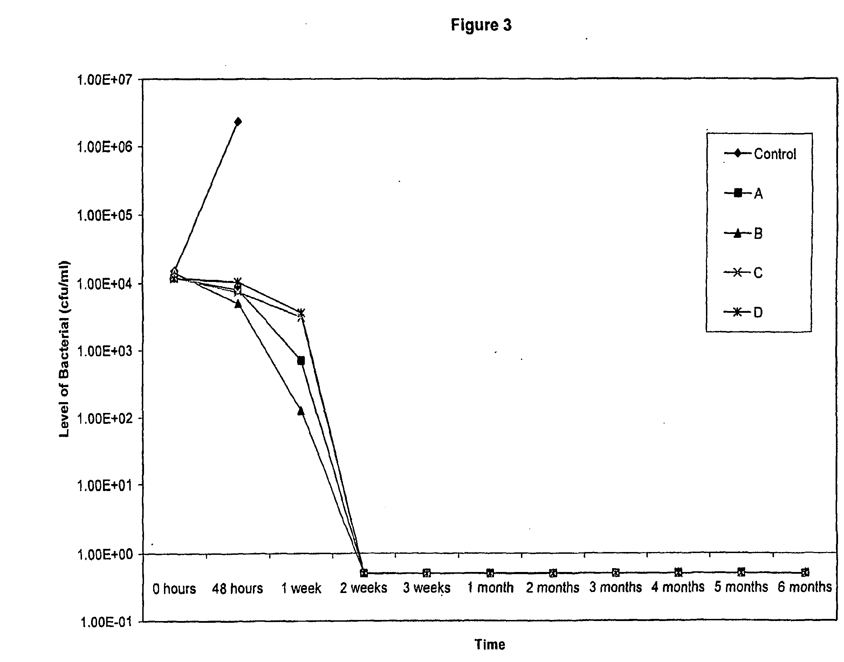

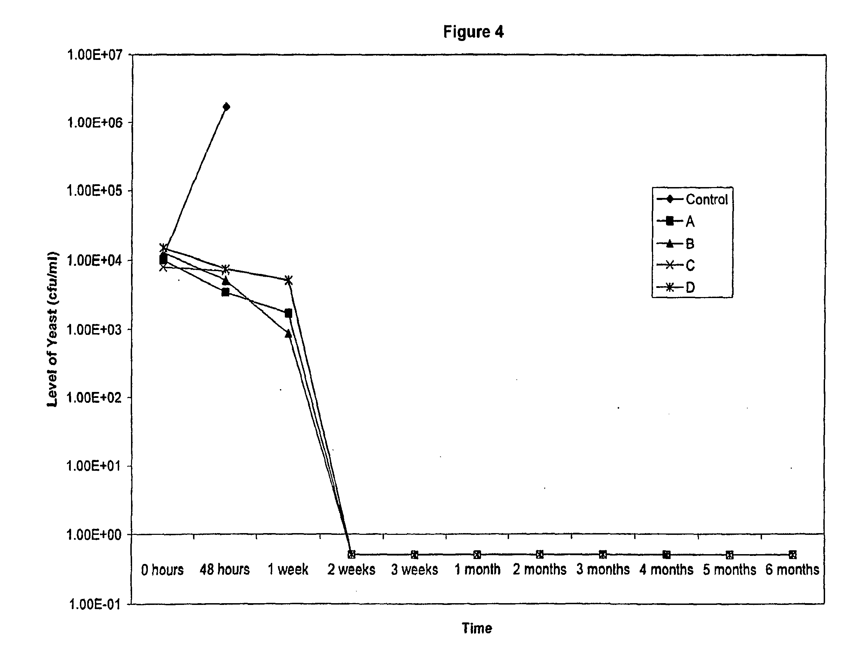

Tables 4 through 6 summarize the results of the experiments. Figure 3 graphically illustrates the results found in Table 4 and Figure 4 graphically illustrates the results found in Table 5.

**TABLE 4: Examination of bacteria (mean cfu/ml) in beverage compositions at 25°C.**

| | **Beverage Composition** | | | | |
|---|---|---|---|---|---|
| **Time** | Control | A | B | C | D |
| 0 hours | 15000 | 12000 | 14300 | 12000 | 11700 |
| 1 week | 2.3 x 10⁶ | 8000 | 5000 | 74000 | 10400 |
| 2 weeks | - | 700 | 126 | 3100 | 3600 |
| 3 weeks | - | 0.50 | 0.50 | 0.50 | 0.50 |
| 1 month | - | 0.50 | 0.50 | 0.50 | 0.50 |
| 2 months | - | 0.50 | 0.50 | 0.50 | 0.50 |
| 3 months | - | 0.50 | 0.50 | 0.50 | 0.50 |
| 4 months | - | 0.50 | 0.50 | 0.50 | 0.50 |
| 5 months | - | 0.50 | 0.50 | 0.50 | 0.50 |
| 6 months | - | 0.50 | 0.50 | 0.50 | 0.50 |

**TABLE 5: Examination of yeasts (mean cfu/ml) in beverage compositions at 25°C.**

| **Beverage Composition** | | | | | |
|---|---|---|---|---|---|
| **Time** | Control | A | B | C | D |
| 0 hours | 11400 | 10000 | 12700 | 7900 | 15000 |
| 1 week | 1.7 x 10⁶ | 3400 | 5100 | 6900 | 7400 |
| 2 weeks | - | 1700 | 870 | - | 5100 |
| 3 weeks | - | 0.50 | 0.50 | 0.50 | 0.50 |
| 1 month | - | 0.50 | 0.50 | 0.50 | 0.50 |
| 2 months | - | 0.50 | 0.50 | 0.50 | 0.50 |
| 3 months | - | 0.50 | 0.50 | 0.50 | 0.50 |
| 4 months | - | 0.50 | 0.50 | 0.50 | 0.50 |
| 5 months | - | 0.50 | 0.50 | 0.50 | 0.50 |
| 6 months | - | 0.50 | 0.50 | 0.50 | 0.50 |

**TABLE 6: Examination of mold in beverage compositions at 25°C. Mold results shown in duplicate as Mold 1 and Mold 2.**

| **Beverage Composition** | **Mold 1** | **Mold 2** |
|---|---|---|
| Control | 3 | 3 |
| A | 0 | 0 |
| B | 0 | 0 |
| C | 0 | 0 |
| D | 0 | 0 |

From data in Tables 4 through 6, the present invention demonstrates preservation, i.e., microbial stability, of beverage compositions with juice percentages above 10%.

### EXAMPLE 3

A noncarbonated beverage matrix was prepared and evaluated as detailed in Example 1 but with the following preservative systems:

| **Beverage Composition** | % Juice Content | Sorbic Acid (ppm) | Benzoic Acid (ppm) | Cinnamic Acid (ppm) | EDTA (ppm) | % Daily Value of Calcium |
|---|---|---|---|---|---|---|
| Control | 10 | 0 | 0 | 0 | 0 | 0 |
| A | 10 | 250 | 150 | 125 | 25 | 10 |
| B | 10 | 150 | 250 | 125 | 25 | 10 |
| C | 10 | 150 | 200 | 125 | 25 | 10 |
| D | 10 | 200 | 150 | 0 | 25 | 10 |
| E | 3 | 250 | 150 | 0 | 25 | 0 |
| F | 3 | 150 | 250 | 0 | 25 | 0 |
| G | 3 | 250 | 250 | 0 | 25 | 0 |
| H | 10 | 150 | 250 | 0 | 0 | 0 |

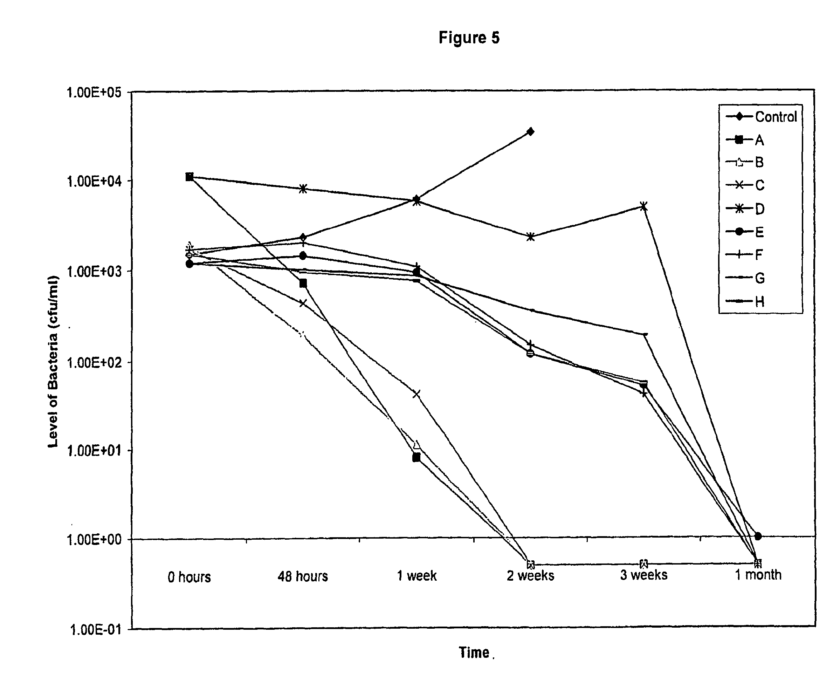

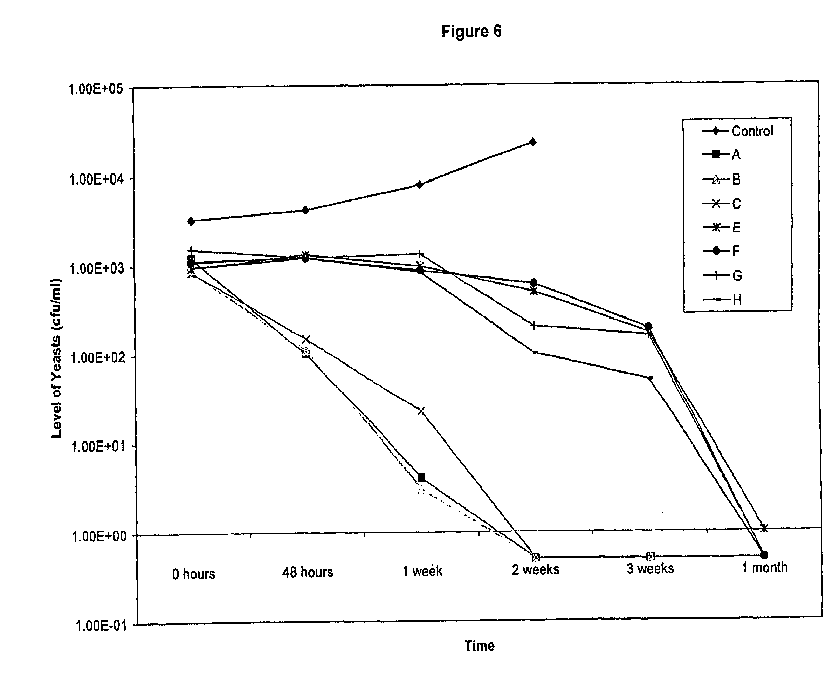

Tables 7 through 9 summarize the results of the experiments. Figure 5 graphically illustrates the results found in Table 7 and Figure 6 graphically illustrates the results found in Table 8.

**TABLE 7: Examination of bacteria (mean cfu/ml) in a beverage composition at 25°C.**

| **Beverage Composition** | | | | | | | | | |
|---|---|---|---|---|---|---|---|---|---|
| **Time** | Control | A | B | C | D | E | F | G | H |
| 0 hour | 1500 | 11000 | 1900 | 1700 | 11000 | 1200 | 1700 | 1200 | 1500 |
| 48 hours | 2300 | 720 | 190 | 440 | 8000 | 1440 | 2000 | 1000 | 950 |
| 1 week | 6100 | 8 | 11 | 42 | 58000 | 940 | 1090 | 860 | 760 |
| 2 weeks | 3.5 x 10⁴ | 0.50 | 0.50 | 0.50 | 23000 | 120 | 150 | 360 | 120 |
| 3 weeks | - | 0.50 | 0.50 | 0.50 | 5000 | 52 | 42 | 189 | 56 |
| 1 month | - | 0.50 | 0.50 | 0.50 | 0.50 | 1.00 | 0.50 | 0.50 | 0.50 |

**TABLE 8: Examination of yeasts (mean cfu/ml) in a beverage composition at 25°C.**

| | **Beverage Composition** | | | | | | | |
|---|---|---|---|---|---|---|---|---|
| **Time** | Control | A | B | C | E | F | G | H |
| 0 hour | 3200 | 1200 | 860 | 840 | 930 | 1100 | 1500 | 950 |
| 48 hours | 4100 | 101 | 110 | 150 | 1300 | 1200 | 1200 | 1200 |
| 1 week | 7800 | 4 | 3 | 22 | 960 | 860 | 1300 | 830 |
| 2 weeks | 2.2 x 10⁴ | 0.50 | 0.50 | 0.50 | 490 | 600 | 200 | 100 |
| 3 weeks | - | 0.50 | 0.50 | 0.50 | 170 | 190 | 160 | 50 |
| 1 month | - | 0.50 | 0.50 | 0.50 | 1.0 | 0.50 | 0.50 | 0.50 |

**TABLE 9: Examination of mold in a beverage composition at 25°C. Mold results shown in duplicate as Mold 1 and Mold 2.**

| **Composition** | **Mold 1** | **Mold 2** |
|---|---|---|
| Control | 3 | 3 |
| A | 0 | 0 |
| B | 0 | 0 |
| C | 0 | 0 |
| 10% juice | | |
| 250 ppm sorbic | | |
| 150 benzoic acid | 0 | 0 |
| 25 ppm EDTA | | |
| 50 ppm cinnamic acid | | |
| 10% juice | | |
| 150 ppm sorbic | | |
| 200 benzoic | 0 | 0 |
| 25 ppm EDTA | | |
| 50 ppm cinnamic acid | | |

From data in Tables 7 through 9, beverage compositions of the present invention are compared with beverages falling outside the present invention. Beverage compositions of the present invention exhibit microbial stability within 14-28 days of being inoculated (for yeasts and bacteria) in comparison to an unpreserved beverage (control) and non-inventive beverages.

### EXAMPLE 4

A noncarbonated beverage matrix was prepared and evaluated as detailed in Example 1 but with the following preservative systems:

| **Beverage Composition** | Sorbic Acid (ppm) | EDTA (ppm) | Cinnamic Acid (ppm) | % Juice | pH | Acid | Brix |
|---|---|---|---|---|---|---|---|
| Control | 0 | 0 | 0 | 5 | 3.28 | 0.32 | 11.83 |
| A | 200 | 30 | 125 | 3 | 3.38 | 0.29 | 11.79 |
| B | 250 | 30 | 125 | 3 | 3.38 | 0.29 | 11.79 |
| C | 300 | 30 | 125 | 3 | 3.38 | 0.29 | 11.79 |
| D | 0 | 30 | 125 | 3 | 3.38 | 0.29 | 11.79 |
| E | 0 | 30 | 200 | 3 | 3.38 | 0.29 | 11.79 |
| F | 200 | 30 | 125 | 5 | 3.42 | 0.29 | 11.75 |
| G | 250 | 30 | 125 | 5 | 3.42 | 0.29 | 11.75 |
| H | 300 | 30 | 125 | 5 | 3.42 | 0.29 | 11.75 |
| I | 0 | 30 | 125 | 5 | 3.42 | 0.29 | 11.75 |
| J | 0 | 30 | 200 | 5 | 3.42 | 0.29 | 11.75 |

Table 10 summarizes the results of the experiments.

**TABLE 10: Examination of yeasts (mean cfu/ml) in a beverage composition at 25°C.**

| **Beverage Composition** | | | | | | | | | | | |
|---|---|---|---|---|---|---|---|---|---|---|---|
| **Time** | Control | A | B | C | D | E | F | G | H | I | J |
| 0 hours | 3.2 x 10⁴ | 9000 | 48 | 20000 | 12000 | 8000 | 16000 | 26000 | 23200 | 13000 | 13000 |
| 1 week | 8.0 x 10⁷ | 240 | 60 | 20 | 6300 | 1.00 | 200 | 100 | 120 | 7600 | 5.00 |
| 2 weeks | - | 0.50 | 0.50 | 0.50 | 112 | 0.50 | 0.50 | 0.50 | 0.50 | 67 | 0.50 |
| 3 weeks | - | 0.50 | 0.50 | 0.50 | 0.50 | 0.50 | 0.50 | 0.50 | 0.50 | 0.50 | 0.50 |
| 1 month | - | 0.50 | 0.50 | 0.50 | 0.50 | 0.50 | 0.50 | 0.50 | 0.50 | 0.50 | 0.50 |

From data in Table 10, various levels of sorbic acid and cinnamic acid in beverages were evaluated with 3% and 5% juice levels in beverages. Beverage compositions of the present invention exhibit microbial stability within 14- , 28 days of being inoculated in comparison to an unpreserved beverage (control) and non-inventive beverages.

### EXAMPLE 5

A noncarbonated beverage matrix was prepared and evaluated as detailed in Example 1 but with the following preservative system:

| **Beverage Composition** | Sorbic Acid (ppm) | Benzoic Acid (ppm) | EDTA (ppm) | Potassium Cinnamate (ppm) | % Juice | pH | Brix | Acid |
|---|---|---|---|---|---|---|---|---|
| Control | 0 | 0 | 0 | 0 | 20 | 3.34 | 11.78 | 0.28 |
| A | 150 | 250 | 25 | 88 | 20 | 3.34 | 11.78 | 0.28 |
| B | 150 | 250 | 25 | 88 | 32 | 3.36 | 11.91 | 0.28 |
| C | 150 | 250 | 25 | 88 | 50 | 3.69 | 12.01 | 0.28 |
| D | 150 | 250 | 25 | 88 | 75 | 3.71 | 12.06 | 0.32 |

Tables 12 through 14 summarize the results of the experiments.

**TABLE 12: Examination of bacteria (mean cfu/ml) in a beverage composition at 25°C.**

| **Beverage Composition** | | | | | |
|---|---|---|---|---|---|
| **Time** | Control | A | B | C | D |
| 0 hours | 820 | 1300 | 1500 | 910 | 800 |
| 1 week | 5.6 x 10⁷ | 230 | 210 | 760 | 540 |
| 2 weeks | - | 0.50 | 1.00 | 103 | 26 |
| 3 weeks | - | 0.50 | 0.50 | 0.50 | 0.50 |
| 1 month | - | 0.50 | 0.50 | 0.50 | 0.50 |
| 2 months | - | 0.50 | 0.50 | 0.50 | 0.50 |
| 3 months | - | 0.50 | 0.50 | - | 0.50 |
| 4 months | - | 0.50 | 0.50 | 0.50 | 0.50 |
| 5 months | - | 0.50 | 0.50 | 0.50 | 0.50 |

**TABLE 13: Examination of yeasts (mean cfu/ml) in a beverage composition at 25°C.**

| **Beverage Composition** | | | | | |
|---|---|---|---|---|---|
| **Time** | Control | A | B | C | D |
| 0 hours | 950 | 1300 | 920 | 840 | 1300 |
| 1 week | 1.11 x 10⁸ | 260 | 150 | 1000 | 770 |
| 2 weeks | - | 160 | 3 | 120 | 38 |
| 3 weeks | - | 1 | 0.50 | 0.50 | 0.50 |
| 1 month | - | 0.50 | 0.50 | 0.50 | 0.50 |
| 2 months | - | 0.50 | 0.50 | 0.50 | 0.50 |
| 3 months | - | 0.50 | | 0.50 | 0.50 |
| 4 months | - | 0.50 | 0.50 | 0.50 | 0.50 |
| 5 months | - | 0.50 | 0.50 | 0.50 | 0.50 |

**TABLE 14: Examination of mold in a beverage composition at 25°C. Mold results shown in duplicate as Mold 1 and Mold 2.**

| **Beverage Composition** | **Mold 1** | **Mold 2** |
|---|---|---|
| Control | 3 | 3 |
| A | 0 | 0 |
| B | 0 | 0 |
| C | 0 | 0 |
| D | 0 | 0 |

From Tables 12 through 14, different levels of juice in a beverage were examined. Beverage compositions of the present invention exhibit microbial stability within 14-28 days of being inoculated in comparison to an unpreserved beverage (control) and non-inventive beverages.

### EXAMPLE 6

A noncarbonated beverage matrix was prepared and evaluated as detailed in Example 1 but with the following preservative systems:

| **Beverage Composition** | Sorbic Acid (ppm) | EDTA (ppm) | Cinnamic Acid (ppm) | % Juice | pH | Brix | Acid |
|---|---|---|---|---|---|---|---|
| Control | 0 | 0 | 0 | 5 | 3.20 | 0.30 | 11.84 |
| A | 350 | 30 | 125 | 10 | 3.43 | 11.87 | 0.28 |
| B | 400 | 30 | 125 | 10 | 3.43 | 11.87 | 0.28 |
| C | 450 | 30 | 125 | 10 | 3.43 | 11.87 | 0.28 |
| D | 500 | 30 | 125 | 10 | 3.43 | 11.87 | 0.28 |
| E | 550 | 30 | 125 | 10 | 3.43 | 11.87 | 0.28 |
| F | 500 | 30 | 0 | 10 | 3.36 | 11.66 | 0.28 |
| G | 550 | 30 | 0 | 10 | 3.36 | 11.66 | 0.28 |

Table 15 summarizes the results of the experiments.

**TABLE 15: Examination of yeasts (mean cfu/ml) in a beverage composition at 25°C.**

| | **Beverage Composition** | | | | | | | |
|---|---|---|---|---|---|---|---|---|
| **Time** | Control | A | B | C | D | E | F | G |
| 0 hours | 1000 | 27000 | 14000 | 20000 | 180 | 100 | - | - |
| 1 week | 8.0 x 10⁶ | 24 | 28 | 10 | 0.50 | 36.00 | 13500 | 19000 |
| 2 weeks | - | 0.50 | 0.50 | 0.50 | 0.50 | 0.50 | 3500 | 5400 |
| 3 weeks | - | 0.50 | 1.00 | 0.50 | 0.50 | 0.50 | 18 | 40 |
| 1 month | - | 0.50 | 0.50 | 0.50 | 0.50 | 0.50 | 0.50 | 0.50 |

From data in Table 15, various levels of sorbic acid were evaluated along with the presence or absence of cinnamic acid. Beverage compositions of the present invention exhibit microbial stability within 14-28 days of being inoculated in comparison to an unpreserved beverage (control) and non-inventive beverages.

### EXAMPLE 7

A noncarbonated beverage matrix was prepared and evaluated as detailed in Example 1 but with the following preservative systems:

| **Beverage Composition** | Sorbic Acid (ppm) | Benzoic Acid (ppm) | EDTA (ppm) | SHMP (ppm) | Cinnamic Acid (ppm) | % Juice | pH | Brix | Acid |
|---|---|---|---|---|---|---|---|---|---|
| Control | 0 | 0 | 0 | 0 | 0 | 3 | 3.46 | 11.90 | 0.31 |
| A | 150 | 250 | 25 | 250 | 0 | 3 | 3.47 | 11.84 | 0.31 |
| B | 150 | 250 | 25 | 0 | 50 | 3 | 3.47 | 11.84 | 0.31 |
| C | 150 | 250 | 25 | 0 | 125 | 3 | 3.47 | 11.84 | 0.31 |

Table 16 summarizes the results of the experiments.

**TABLE 16: Examination of Z. bailii (mean cfu/ml) in beverage compositions.**

| **Beverage Composition** | | | | |
|---|---|---|---|---|
| **Time** | Control | A | B | C |
| 0 hours | 2.2 x 10⁴ | 26000 | 10000 | 15000 |
| 48 hours | 3.4 x 10⁴ | 16000 | 21000 | 9000 |
| 1 week | 1.0 x 10⁶ | 7.3 x 10⁵ | 41000 | 2100 |
| 2 weeks | - | 2.7 x 10⁶ | 1.19 x 10⁵ | 3300 |
| 3 weeks | - | - | - | 1400 |

From data in Table 16, the present invention has the ability to provide bacteriostatic capability when 125 ppm cinnamic is incorporated in a beverage composition. For example, the present invention may be more effective at preventing preservative resistant microorganism growth than a preservative combination of, e.g., sorbic acid/benzoic acid/EDTA/sodium hexametaphosphate.

## Claims

1. A beverage composition comprising:
a preservative system comprising from 20 ppm to 400 ppm of cinnamic acid and from 100 ppm to 500 ppm of at least one weak acid chosen from benzoic acid, sorbic acid, alkali metal salts of benzoic acid and/or sorbic acid, and mixtures thereof;
a beverage component comprising a juice; and
from 60% to 99% of water, by weight relative to the total composition;
wherein the composition has a pH ranging from 2.4 to 4.5,
with the proviso that the composition does not comprise tea concentrates, extracts or powders.

2. The composition according to claim 1, wherein the cinnamic acid is present in a range from 50 ppm to 300 ppm.

3. The composition according to claim 1 or 2, wherein the at least one weak acid is sorbic acid.

4. The composition according to claim 3, wherein the sorbic acid is present In a range from 200 ppm to 450 ppm.

5. The composition according to any preceding claim, wherein the water is present in an amount ranging from 80% to 99%, by weight relative to the total composition.

6. The composition according to any preceding claim, wherein the water has a hardness value ranging from 55 ppm to 250 ppm, and optionally the water has a hardness value ranging from 60 ppm to 180 ppm.

7. The composition according to any preceding claim, wherein the juice is present in an amount ranging from 0.1% to 50%, by weight relative to the total composition, and optionally the juice is present In an amount ranging from 0.5% to 25%, by weight relative to the total weight of the composition.

8. The composition according to any preceding claim, wherein the Juice is chosen from juices of fruits, vegetables, botanicals, and mixtures thereof.

9. The composition according to any of claims 1 to 6, wherein the beverage component further comprises a sweetener.

10. The composition according to claim 9, wherein the sweetener is chosen from nutritive sweeteners, non-nutritive sweeteners, and mixtures thereof.

11. The composition according to any preceding claim, further comprising from 10 ppm to 40 ppm of EDTA.

12. The composition according to claim 11, wherein the EDTA is present in a range from 10 ppm to 30 ppm.

13. The composition according to any preceding claim, further comprising at least one optional ingredient chosen from additional preservatives, coloring agents, flavoring agents, flavanolds, vitamins, minerals, proteins, emulsifiers, carbonation components, thickeners, antioxidants, anti-foaming agents, and mixtures thereof.

## Patentansprüche

1. Getränkezusammensetzung, die enthält:
ein Konservierungssystem, die 20 ppm bis 400 ppm Zimtsäure und 100 ppm bis 500 ppm wenigstens einer schwachen Säure, die aus Benzoesäure, Sorbinsäure, Alkalimetallsalzen der Benzoesäure und/oder Sorbinsäure und Mischungen hiervon ausgewählt ist, enthält;
eine Getränkekomponente, die einen Saft enthält; und
60 Gew.-% bis 99 Gew.-% Wasser relativ zur Gesamtzusammensetzung;
wobei die Zusammensetzung einen pH-Wert im Bereich von 2,4 bis 4,5 aufweist, unter der Voraussetzung, dass die Zusammensetzung keine Teekonzentrate, -extrakte oder -pulver enthält.

2. Zusammensetzung nach Anspruch 1, wobei die Zimtsäure in einem Bereich von 50 ppm bis 300 ppm vorhanden ist.

3. Zusammensetzung nach Anspruch 1 oder 2, wobei die wenigstens eine schwache Säure Sorbinsäure ist.

4. Zusammensetzung nach Anspruch 3, wobei die Sorbinsäure in einem Bereich von 200 ppm bis 450 ppm vorhanden ist.

5. Zusammensetzung nach einem vorhergehenden Anspruch, wobei Wasser in einem Mengenbereich von 80 Ges.-% bis 99 Gew.-% relativ zur Gesamtzusammensetzung vorhanden ist.

6. Zusammensetzung nach einem vorhergehenden Anspruch, wobei das Wasser einen Härtewert im Bereich von 55 ppm bis 250 ppm aufweist, wobei das Wasser wahlweise einen Härtewert im Bereich von 60 ppm bis 180 ppm aufweist.

7. Zusammensetzung nach einem vorhergehenden Anspruch, wobei der Saft in einem Mengenbereich von 0,1 Gew.-% bis 50 Gew.-% relativ zur Gesamtzusammensetzung vorhanden ist, wobei der Saft wahlweise in einem Mengenbereich von 0,5 Gew.-% bis 25 Gew.-% relativ zur Gesamtzusammensetzung vorhanden ist.

8. Zusammensetzung nach einem vorhergehenden Anspruch, wobei der Saft aus Säften aus Früchten, Gemüsesorten, Pflanzen und Mischungen hiervon ausgewählt ist.

9. Zusammensetzung nach einem der Ansprüche 1 bis 6, wobei die Getränkekomponente des Weiteren ein Süßungsmittel enthält.

10. Zusammensetzung nach Anspruch 9, wobei das Süßungsmittel aus Nahrungssüßungsmitteln, Nicht-Nahrungssüßungsmitteln und Mischungen hiervon ausgewählt ist.

11. Zusammensetzung nach einem vorhergehenden Anspruch, die ferner 10 ppm bis 40 ppm EDTA enthält.

12. Zusammensetzung nach Anspruch 11, wobei EDTA in einem Bereich von 10 ppm bis 30 ppm vorhanden ist.

13. Zusammensetzung nach einem vorhergehenden Anspruch, die ferner wenigstens einen optionalen Bestandteil, der aus zusätzlichen Konservierungsstoffen, Färbungsmitteln, Duftmitteln, Flavonoiden, Vitaminen, Mineralien, Proteinen, Emulgatoren, Karbonisationskomponenten, Verdickungsmitteln, Antioxidationsmitteln, Entschäumungsmitteln und Mischungen hiervon ausgewählt ist, enthält.

## Revendications

1. Composition de boisson comportant :
un système de conservation comprenant de 20 ppm à 400 ppm d'acide cinnamique et de 100 ppm à 500 ppm d'au moins un acide faible choisi parmi l'acide benzoïque, l'acide sorbique, les sels de métaux alcalins de l'acide benzoïque et/ou de l'acide sorbique, et les mélanges de ceux-ci ;
un composant de boisson comportant un jus ; et
de 60 % à 99 % d'eau, en poids par rapport à la composition totale ;
dans laquelle la composition a un pH allant de 2,4 à 4,5,
sous réserve que la composition ne comprenne pas de concentrés, d'extraits ou de poudres de thé.

2. Composition selon la revendication 1, dans laquelle l'acide cinnamique est présent dans une plage allant de 50 ppm à 300 ppm.

3. Composition selon la revendication 1 ou 2, dans laquelle le au moins un acide faible est l'acide sorbique.

4. Composition selon la revendication 3, dans laquelle l'acide sorbique est présent dans une plage allant de 200 ppm à 450 ppm.

5. Composition selon l'une quelconque des revendications précédentes, dans laquelle l'eau est présente dans une quantité allant de 80 % à 99 %, en poids par rapport à la composition totale.

6. Composition selon l'une quelconque des revendications précédentes, dans laquelle l'eau a une valeur de dureté allant de 55 ppm à 250 ppm, et, de manière facultative, l'eau a une valeur de dureté allant de 60 ppm à 180 ppm.

7. Composition selon l'une quelconque des revendications précédentes, dans laquelle le jus est présent dans une quantité allant de 0,1 % à 50 %, en poids par rapport à la composition totale, et, de manière facultative, le jus est présent dans une quantité allant de 0,5 % à 25 %, en poids par rapport au poids total de la composition.

8. Composition selon l'une quelconque des revendications précédentes, dans laquelle le jus est choisi à partir de jus de fruits, de jus de légumes, de jus botaniques, et de mélanges de ceux-ci.

9. Composition selon l'une quelconque des revendications 1 à 6, dans laquelle le composant de boisson comprend en outre un édulcorant.

10. Composition selon la revendication 9, dans laquelle l'édulcorant est choisi à partir d'édulcorants nutritifs, d'édulcorants non nutritifs, et de mélange de ceux-ci.

11. Composition selon l'une quelconque des revendications précédentes, comportant en outre de 10 ppm à 40 ppm d'acide EDTA.

12. Composition selon la revendication 11, dans laquelle l'acide EDTA est présent dans une plage allant de 10 ppm à 30 ppm.

13. Composition selon l'une quelconque des revendications précédentes, comportant en outre au moins un ingrédient facultatif choisi à partir de conservateurs supplémentaires, d'agents colorants, d'agents aromatisants, de flavonoïdes, de vitamines, de minéraux, de protéines, d'émulsifiants, de composants de carbonatation, d'épaississants, d'antioxydants, d'antimoussants et de mélanges de ceux-ci.
